# EUROPÄISCHE PATENTANMELDUNG

(11) **EP 0 591 689 A1**
(43) Veröffentlichungstag der Anmeldung: **13.04.1994**
(21) Anmeldenummer: 93114255.8
(22) Anmeldetag: 06.09.1993
(51) Int. Cl.: B01J 35/04, F01N 3/28

(54) **Metallträgerkatalysator mit in einem Mantelrohr eingeschweisster Matrix aus katalytisch beschichteten Metallbändern**

(30) Priorität: 05.10.1992 DE 4233404
(71) Anmelder: Degussa Aktiengesellschaft, D-60311 Frankfurt (DE)
(72) Erfinder: Domesle, Rainer, Dr., D-63755 Alzenau (DE); Engler, Bernd, Dr., D-63457 Hanau (DE); Lox, Egbert, Dr., D-63457 Hanau (DE)

(57) **Zusammenfassung**

Monolithische Metallträgerkatalysatoren mit einer katalytisch beschichteten Matrix aus mehreren miteinander verschlungenen Blechstapeln von gewellten oder abwechselnd gewellten und glatten Metallbändern, deren freie Enden mit einem umhüllenden Mantelrohr beliebigen Querschnitts fügetechnisch verbunden sind, können sehr wirtschaftlich und mit ausgezeichneter Schichtdickengleichmäßigkeit der katalytischen Beschichtung hergestellt werden, wenn die für den Metallträgerkatalysator benötigten Blechstapel aus zuvor beschichteten und abgelängten Metallbändern zusammengestellt und zur Formung der Matrix miteinander verschlungen werden, die Matrix sodann in das Mantelrohr eingesetzt wird und die freien Enden der Metallbänder am Mantelrohr durch Schweißen befestigt werden.

## Beschreibung

Die Erfindung betrifft monolithische Metallträgerkatalysatoren mit einer katalytisch beschichteten Matrix aus mehreren miteinander verschlungenen oder im Zick-Zack gefalteten Blechstapeln von gegebenenfalls unterschiedlich in beliebiger Form gewellten oder abwechselnd gewellten und glatten Metallbändern, die an ihren Berührungsstellen mit einem umhüllenden Mantelrohr beliebigen Querschnitts fügetechnisch mit diesem verbunden sind.

Gattungsgemäße Metallträger für Katalysatoren werden zum Beispiel in der DE-OS 40 25 434 bzw. DE-PS 40 16 276 sowie in der EP 0 245 736 und EP 0 245 737 beschrieben. Die Metallträgermatrix besteht in der Regel aus einer hochtemperaturfesten ferritischen Cr-, Al-haltigen Eisenlegierung und enthält als wichtige weitere Bestandteile Spuren von Ce, Zr, Y, Seltenerd-, Erdalkali-und/oder Alkalimetallen, um die Temperaturfestigkeit zu erhöhen und das Abplatzen der schützenden Oxidschicht des Stahls zu verhindern.

Gemäß den angegebenen Patent- bzw. Offenlegungsschriften wird die Metallträgermatrix durch Verschlingen von ein oder mehreren Blechstapeln aus gewellten oder abwechselnd gewellten und glatten Metallbändern erzeugt und anschließend in ein Mantelrohr eingesetzt. Dann werden die Metallbänder an den Berührungsstellen mit den Mantelrohr-Innenflächen zum Fixieren der Metallmatrix im Mantelrohr durch geeignete fügetechnische Verfahren mit dem Mantelrohr verbunden.

Als geeignetes Fügeverfahren wird in der Regel das aufwendige Hochtemperaturlöten im Hochvakuum bei Temperaturen oberhalb 1100° C angewandt. Verschiedene Schweißverfahren wie das Elektronenstrahlschweißen (DE-OS 27 20 322) und das Laserstrahlschweißen (DE-OS 27 27 967) sind bei Metallträgern mit spiralig aufgewickelter Matrix beschrieben.

Die so gefertigten Metallträger werden anschließend mit einer aktivitätssteigernden Zwischenschicht aus feinteiligen hochoberflächigen Metalloxiden und Promotoren - gemeinhin als Washcoat bezeichnet - und katalytisch aktiven Edelmetallen beschichtet und danach an den Mantelrohrenden zum Beispiel in das Abgassystem einer Brennkraftmaschine eingeschweißt.

Vorteilhaft ist die hohe mechanische Stabilität der durch Hochtemperaturlötung hergestellten Metallträger bzw. Metallträgerkatalysatoren. Ein Ausschieben bzw. Teleskopieren der Metallträgermatrix aus dem Mantelrohr durch den Abgasdruck und Temperaturwechselbeanspruchung wird bei diesen Katalysatoren nicht beobachtet. Diese Stabilität ist eine Folge der Tatsache, daß die freien Enden jedes einzelnen Metallbandes mit dem Mantelrohr fest verbunden sind.

Die Beschichtung des fertigen Metallträgers führt jedoch zu sehr ungleichmäßigen Beschichtungsdicken, denn in den in der Regel spitzwinkligen, aber auch rechtwinkligen Ecken längs der Berührungslinie zwischen zwei benachbarten Metallbändern sammelt sich infolge der Kapillarkräfte mehr Beschichtungsmaterial an als auf den freien Flächen. Daraus folgt ein erhöhter Verbrauch an Beschichtungsmaterial und Edelmetallen. Die Beschichtung nach Fertigstellung der Metallträger stellt einen zusätzlichen, sehr aufwendigen Fertigungsschritt dar.

In Konkurrenz zu dem beschriebenen Fertigungsprozeß befindet sich ein anderes Verfahren zur Herstellung von Metallträgerkatalysatoren. Dieses beginnt mit der Aufbringung der aktivitätssteigernden Zwischenschicht und der Edelmetalle auf glatte und/oder gewellte Metallbänder. Abhängig von der Prägung der Bänder werden anschließend nur gewellte oder je ein glattes und ein gewelltes Band spiralig aufgewickelt und mit einer entsprechend hohen Vorspannung in das Mantelrohr eingepreßt. Dauerstandsprüfungen eines derartigen Metallkatalysatorkonzeptes ergaben jedoch, daß bei der harten Beanspruchung des Katalysators am Kraftfahrzeug die rauhen Kontaktstellen zwischen den Metallbändern nicht ausreichen, um ein Ausschieben bzw. das Teleskopieren der Matrix durch den Abgasdruck aus dem Mantelrohr zu verhindern. Zur Abhilfe wurden Metallstifte spezieller Ausführung von einer Mantelseite durch die Matrix hindurch auf die andere Mantelseite getrieben und mit dem Mantelrohr verschweißt, um ein seitliches Austreten des Abgases aus dem Katalysator zu unterbinden. Diese Bauart von Metallträgerkatalysatoren ist in der Finnischen Patentanmeldung 896 294 offenbart. Aber auch verschiedene Versionen dieser Technik ergaben nur eine unvollständige Sicherheit gegen oben genannte Ausfälle bei harten, praxisnahen Prüfungen, da der verwendete ferritische Stahl bereits bei Temperaturen je nach genauer Materialzusammensetzung zwischen 550 und 900° C erweicht und ein Lockern und Lösen der Matrix um den Haltestift wegen der Vibration und Gaspulsationen im Abgastrakt einsetzt.

Darüber hinaus ist leicht verständlich, daß die Haltefunktion des Metallstiftes um so geringer ist, je geringer die Zellendichte des Metallträgers ist. Niedrige Zellendichte mit ca. 30 Zellen/cm² sind demnach aus Haltbarkeitsgründen kaum zugänglich.

Abgesehen davon erhöht der Einbau des Haltestiftes den Druckverlust und das Gewicht des Metallkatalysators dieser Bauart, was eine Einbuße des Vorteils gegenüber dem Metallkatalysator der anderen Ausführung darstellt.

Aufgabe der vorliegenden Erfindung ist es deshalb, einen Metallträgerkatalysator zur Verfügung zu stellen, der die hohe mechanische Festigkeit von Metallträgerkatalysatoren besitzt, bei denen die Berührungsstellen der Matrix mit dem umgebenden Mantelrohr fügetechnisch verbunden sind, der sich aber durch eine hervorragende Gleichmäßigkeit der Beschichtung auf den Metallbändern auszeichnet und insbesondere keine vermehrte Ansammlung von Beschichtungsdispersion in den spitzwinkligen Ecken längs der Berührungslinien zweier Metallbänder aufweist.

Erfindungsgemäß wird diese Aufgabe durch einen gattungsgemäßen Metallträgerkatalysator gelöst, der dadurch erhältlich ist, daß die für den Metallträgerkatalysator benötigten Blechstapel aus zuvor beschichteten und abgelängten bzw. gefalteten Metallbändern zusammengestellt und zur Formung der Matrix miteinander verschlungen werden, die Matrix sodann in das Mantelrohr eingesetzt wird und die Berührungsstellen der Metallbänder mit dem Mantelrohr durch Schweißen mit diesem verbunden werden. Das Mantelrohr kann auch aus Halbschalen aufgebaut sein.

Als geeignete Schweißverfahren bieten sich hierbei das Elektronenstrahlschweißen oder das Laserstrahlschweißen an, jedoch sind auch andere Schweißverfahren denkbar. Wesentlich an der Auswahl des Schweißverfahrens ist jedoch, daß die Matrix bis auf die Berührungsstellen mit dem Mantelrohr während des Schweißvorgangs nur moderaten Temperaturen ausgesetzt wird, um die katalytische Beschichtung nicht thermisch zu schädigen.

Aus diesen Gründen ist auch eine Lötung der beschichteten Metallbänder in das Mantelrohr nur bei ganz wenigen speziellen Beschichtungsarten möglich und in der überwiegenden Mehrzahl der Fälle nicht anwendbar, da bei den Standard-Lötverfahren die ganze Matrix zusammen mit dem Mantel erhitzt wird. Zum Erfolg können lediglich solche Lötverfahren führen, bei denen die Matrix wie beim Schweißen nur im Mantelbereich erhitzt wird.

Die Anbindung der Matrix an das Mantelrohr kann mittels beliebiger am Umfang befindlicher kontinuierlicher oder unterbrochener Schweißnähte in beliebiger Zahl erfolgen. Die Schweißnähte an der Manteloberfläche können z. B. spiralig, ringförmig, sinusförmig oder sägezahnartig ausgeführt sein, wobei aus Fertigungsgründen der Primärform der Schweißnaht eine Sekundärform aufmoduliert sein kann. Auch unterbrochene Schweißnähte sind denkbar, z. B. wenn sie schräg zum Mantelrohr verlaufen.

Zur Erzielung einer hohen Festigkeit im Dauerbetrieb kann es von Vorteil sein, die Schweißnähte nur in bestimmten Abschnitten über die Mantellänge anzuordnen, z. B. in der Nähe des späteren Abgasein- bzw. Austritts.

Zur Herstellung eines dauerhaften Kontaktes zwischen Mantelrohr und den Mantelbändern ist es ratsam, letztere vor dem Schweißvorgang mechanisch, z. B. mit einer Bürste abzureinigen oder auf chemischem Wege gänzlich oder teilweise durch Anätzen oder Auflösen von der Beschichtung zu befreien.

Auch ist es möglich, die Metallbänder vor dem Aufbringen der katalytischen Beschichtung an den späteren Berührungsstellen mit dem Mantelrohr mit einer Trennmittelschicht zu beschichten, die eine katalytische Beschichtung verhindert oder ein leichtes Entferen der katalytischen Beschichtung vor dem Verschweißen ermöglicht.

Bevorzugte Ausführungsform derartig hergestellter Katalysatoren sehen, besonders bei Katalysatorstirnflächen > 15 cm², eine Matrixstruktur aus gestapelten und gegebenenfalls anschließend verformten Metallbändern mit abwechselnd glatten und gewellten Bändern z. B. nach DE-OS 40 16 276 vor, bei denen jedes Ende der Metallbänder Mantelberührung aufweist. Gleiches gilt für eine Matrixstruktur mit evolventenförmigen Schichten nach EP-PS 0 245 736.

Die Verwendung eines glatten Bandes ist entbehrlich, wenn die gewellten Bänder so ausgeführt sind, daß beim Falten (vergleiche zum Beispiel USP 4,402,871) oder Stapeln mit evtl. anschließendem Verdrillen ein gasdurchlässiger Kanal entsteht. Mögliche Ausführungsformen von gewellten Metallbändern sind Fischgratstrukturen (USP 4 753 919) oder geschlitzte Bänder mit entsprechender Prägung.

Von besonderer Bedeutung ist das erfindungsgemäße Einschweißen dann, wenn die glatten und/oder gewellten Metallbänder mit z. B. Durchbrüchen, Schlitzen, Perforationen beliebiger Art usw., versehen sind, und diese noch Zusatzprägungen aufweisen, die den Metallbändern eine besondere Struktur aufmodulieren. Diese Träger sind im normalen Herstellungsprozeß, d. h. durch Eintauchen, Aufsaugen oder Besprühen nur schlecht zu beschichten, da überschüssiges Beschichtungsmaterial nur in ungenügender Weise, z. B. durch Ausblasen mit Druckluft oder Aussaugen, entfernt werden kann.

Darüber hinaus tritt bei diesen Metallträgern eine verstärkte Aufhäufung der Beschichtung allein aufgrund der Oberflächenspannung der wäßrigen Beschichtungsdispersion in unmittelbarer Nähe der Perforationen auf und kann diese sogar verschließen und unwirksam machen. Diese unerwünschte, ungleichmäßige Belegung läßt sich vermeiden, wenn bei der beschriebenen Ausbildung der Metallbänder die Bänder zunächst für sich beschichtet, gegebenenfalls abgelängt und anschließend in ein Mantelrohr eingeschweißt werden.

Im Hinblick auf eine hohe Dauerstandsfestigkeit erfindungsgemäß ausgeführter Metallkatalysatoren hat die Art der Gestaltung der Metallbänder im Bereich des Mantelrohrs entscheidende Bedeutung. Bevorzugt ist eine Ausführung, wo die gewellten Bänder mantelseitig glatte Enden oder eine sehr flache Wellung aufweisen, die sich ein Stück an das Mantelrohr anschmiegen.

In diesem Fall werden diese mit den gleichlangen glatten Bändern sowohl untereinander als auch mit dem Mantelrohr in einem Arbeitsgang verschweißt. Neben der Verschweißung von Matrix und Mantelrohr können zusätzlich andere konstruktive Maßnahmen zur Matrixfixierung getroffen werden. Solche Maßnahmen stellen z. B. ein leicht konisch zulaufendes Mantelrohr oder Sicken im Mantelrohr dar. Auch ist es möglich, mit keramischen Klebern eine Vorfixierung vorzunehmen. Die in das Mantelrohr eingeführte Metallmatrix mit katalytisch aktiven Komponenten kann bereits gegen ungewolltes Öffnen z. B. durch Verhaken, Schweißpunkten oder anderen Fügetechniken vorfixiert sein.

Falls es die Art des Katalysators erfordert, kann nach Einschweißung des Katalysators in das Mantelrohr oder auch auf die vorfixierte Metallmatrix ohne Mantelrohr noch eine weitere katalytische Komponente aufgebracht werden.

So kann z. B. zunächst nur eine Beschichtung aus feinteiligen, oberflächenreichen Oxiden, wie sie bei Katalysatoren zur Reinigung von Abgasen aus Verbrennungsmotoren eingesetzt wird, auf die Metallbänder aufgebracht werden und erst nach Einschweißen in das Mantelrohr eine Imprägnierung z. B. mit Edelmetallösung und/oder Promotoren erfolgen.

Durch eine derartige Imprägnierung erfolgt keine Ansammlung der gelöst aufgebrachten Komponenten in den Zwickeln zwischen den sich berührenden Metallbändern wie es bei nachträglicher katalytischer Beschichtung des vorgefertigten Metallträgers der Fall ist. Sogar eine nachträgliche Dispersionsbeschichtung eines erfindungsgemäß aus beschichteten Metallbändern hergestellter Katalysatorkörper führt zu besseren Beschichtungsergebnissen als nach bislang bekannten Verfahren, da die Beschichtungsstärke nach der erfindungsgemäßen Vorgehensweise über den Zellquerschnitt einheitlicher ist.

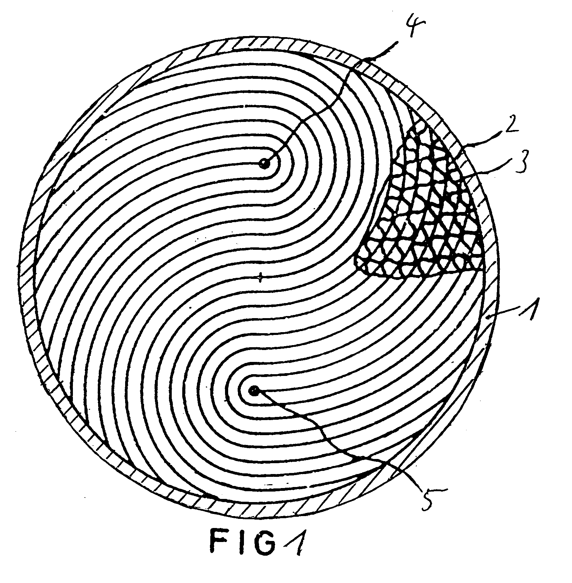

Die Erfindung wird nun anhand einiger Beispiele näher erläutert. Es zeigen
- Figur 1:: Metallträgerkatalysator mit S-förmiger Matrix aus abwechselnd gewellten und glatten Metallbändern
- Figur 2:: Metallträgerkatalysator mit evolventenförmiger Matrix aus abwechselnd gewellten und glatten Metallbändern
- Figur 3:: Ausbildung verschiedener Schweißnähte zur Fixierung der freien Enden der Metallbänder an dem Mantelrohr
a) spiralige Schweißnaht
b) ringförmige Schweißnähte mit Unterbrechungen
Figur 1 zeigt eine S-förmig verschlungene Matrix aus abwechselnd glatten (2) und gewellten (3) Metallbändern in einem Mantelrohr (1) nach EP 0 245 737. Die Matrix wird aus einem rechteckförmigen Stapel von abwechselnd glatten und gewellten Metallbändern durch Verschlingen um die beiden Fixpunkte (4) und (5) gewonnen.

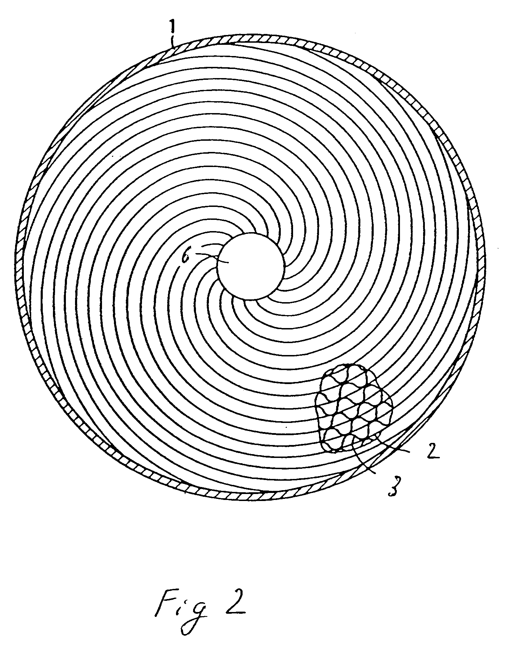

Figur 2 zeigt eine evolventenförmige Matrix aus abwechselnd glatten (2) und gewellten Metallbändern (3) in einem Mantelrohr (1) nach EP 0 245 736. Zur Bildung dieser Matrix werden die Metallbänder nach der katalytischen Beschichtung nach Bedarf gewellt, abgelängt, jeweils mit einem Ende an einem zylinderförmigen Einsatz (6) angeschweißt und dann evolventenförmig verdrillt.

Beiden Ausführungsformen ist gemeinsam, daß die freien Enden eines jeden Metallbandes mit der Innenfläche des Mantelrohres in Kontakt stehen und mit diesem durch Schweißen fest verbunden sind. Dadurch, daß die Metallbänder vor Ausbildung der Metallmatrix katalytisch beschichtet werden, weisen die erfindungsgemäßen Metallträgerkatalysatoren eine sehr gleichmäßige Beschichtung auf und lassen sich außerdem sehr wirtschaftlich fertigen.

Hinzu kommt eine Einsparung von katalytischem Beschichtungsmaterial, da Materialanhäufungen durch Kapillarkräfte von vornherein vermieden werden.

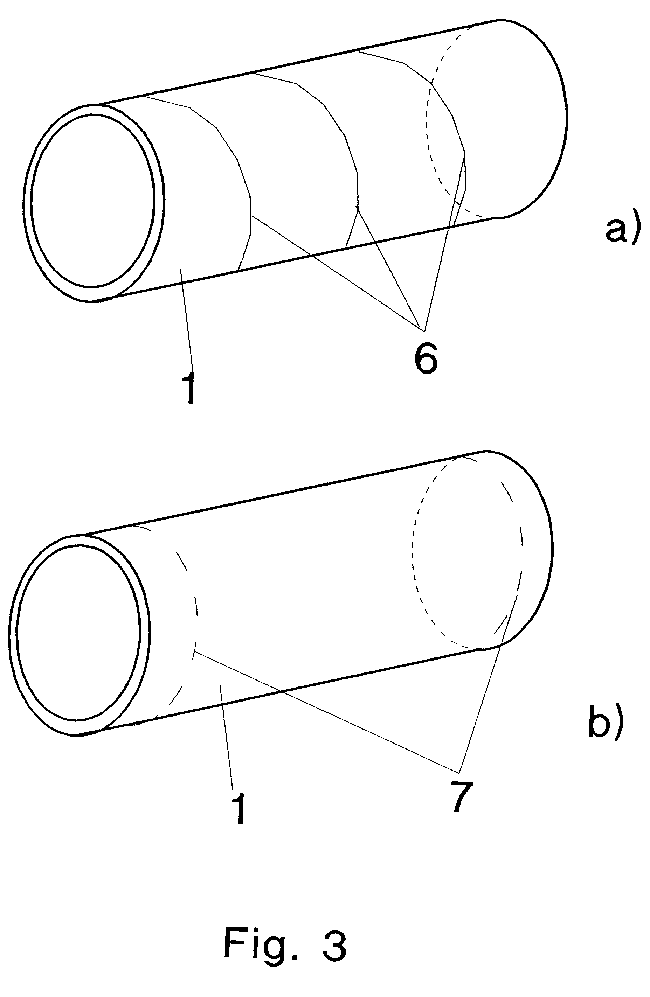

Figur 3 a) und b) zeigt verschiedene Ausführungsformen von Schweißnähten zur dauerhaften Fixierung der Metallmatrix im umgebenden Mantelrohr. (1) bezeichnet dabei das Mantelrohr, (6) eine spiralförmige Schweißnaht und (7) unterbrochene, ringförmige Schweißnähte in der Nähe der Mantelrohrenden.

## Patentansprüche

1. Monolithischer Metallträgerkatalysator mit einer katalytisch beschichteten Matrix aus mehreren miteinander verschlungenen oder im Zick-Zack gefalteten Blechstapeln von gegebenenfalls unterschiedlich in beliebiger Form gewellten oder abwechselnd gewellten und glatten Metallbändern, die an ihren Berührungsstellen mit einem umhüllenden Mantelrohr beliebigen Querschnitts fügetechnisch mit diesem verbunden sind,
**dadurch erhältlich**,
daß die für den Metallträgerkatalysator benötigten Blechstapel aus zuvor beschichteten und abgelängten beziehungsweise gefalteten Metallbändern zusammengestellt und zur Formung der Matrix miteinander verschlungen werden, die Matrix sodann in das Mantelrohr eingesetzt wird und die Berührungsstellen der Metallbänder mit dem Mantelrohr durch Schweißen mit diesem verbunden werden.

2. Monolithischer Metallträgerkatalysator nach Anspruch 1,
**dadurch gekennzeichnet,**
daß die Matrix aus S-förmig, sternförmig oder evolventenförmig miteinander verschlungenen Blechstapeln besteht.

3. Monolithischer Metallträgerkatalysator nach Anspruch 1,
**dadurch gekennzeichnet**,
daß die Matrix aus im Zick-Zack gefalteten und miteinander verschlungenen Blechstapeln besteht.

4. Monolithischer Metallträgerkatalysator nach Anspruch 2 oder 3,
**dadurch erhältlich**,
daß die Berührungsstellen der Metallbänder mit dem Mantelrohr und/oder der Metallbänder untereinander vor dem Schweißen ganz oder teilweise von der Beschichtung befreit werden oder beschichtungsfrei hergestellt sind.

5. Monolithischer Metallträgerkatalysator nach den Ansprüchen 1 bis 4,
**dadurch gekennzeichnet,**
daß die gewellten Metallbänder mantelseitig glatte oder nur leicht gewellte freie Enden aufweisen, die mit dem Mantel und untereinander sowie gegebenenfalls mit den als Zwischenlagen dienenden glatten Metallbändern verschweißt sind.

6. Monolithischer Metallträgerkatalysator nach den Ansprüchen 1 bis 5,
**dadurch gekennzeichnet,**
daß nach Verschweißung der beschichteten Matrix weitere katalytische Komponenten durch Imprägnierung oder Dispersionsbeschichtung aufgebracht werden.

7. Verfahren zur Herstellung eines monolithischen Metallträgerkatalysators nach den Ansprüchen 1 bis 6,
**dadurch gekennzeichnet**,
daß die für den Metallträgerkatalysator benötigten Blechstapel aus den zuvor beschichteten und abgelängten Metallbändern zusammengestellt und zur Formung der Matrix miteinander verschlungen werden und daß die so erhaltene Matrix dann in das Mantelrohr eingesetzt wird und Berührungsstellen der Metallbänder mit dem Mantelrohr durch Schweißen mit diesem verbunden werden.

8. Verfahren nach Anspruch 7,
**dadurch gekennzeichnet**,
daß die Metallbänder vor dem Aufbringen der katalytischen Beschichtung an den späteren Berührungsstellen mit dem Mantelrohr mit einer Trennmittelschicht beschichtet werden, die eine katalytische Beschichtung verhindert oder ein leichtes Entfernen der katalytischen Beschichtung vor dem Verschweißen ermöglicht.

9. Verwendung der Katalysatoren nach den Ansprüchen 1 bis 6 zur Abgasreinigung von stationären und instationären Verbrennungskraftmaschinen.
